# EUROPÄISCHE PATENTSCHRIFT

(11) **EP 2 721 313 B1**
(45) Veröffentlichungstag und Bekanntmachung des Hinweises auf die Patenterteilung: **22.03.2017**
(21) Anmeldenummer: 12728205.1
(22) Anmeldetag: 12.06.2012
(51) Int. Cl.: F16C 33/12, F16C 33/10

(54) **GLEITLAGER**
SLIDING BEARING
PALIER LISSE

(30) Priorität: 15.06.2011 DE 102011077556
(43) Veröffentlichungstag der Anmeldung: 23.04.2014
(73) Patentinhaber: Schaeffler Technologies AG & Co. KG, 91074 Herzogenaurach (DE)
(72) Erfinder: BRAUN, Wolfgang, 97493 Garstadt (DE); SCHWARZ, Sergej, 90491 Nürnberg (DE); GRUNAU, Arbogast, 91085 Weisendorf (DE)
(86) Internationale Anmeldenummer: PCT/EP2012/061076
(87) Internationale Veröffentlichungsnummer: WO 2012/171897

(56) Entgegenhaltungen:
- WO-A1-2005/106065
- DE-A1- 10 061 397
- DE-A1-102008 037 871
- DE-U1-202006 014 691
- JP-A- 2002 235 748

## Beschreibung

### Gebiet der Erfindung

Die Erfindung betrifft ein Gleitlager, insbesondere ein hydrodynamisches Gleit-lager. Ein derartiges Gleitlager weist im Allgemeinen einen rotierenden Reibpartner, einen den rotierenden Reibpartner lagernden Gegenlaufpartner sowie einem Schmierfilm zwischen Reibpartner und Gegenlaufpartner auf.

### Hintergrund der Erfindung

Bei hohen Lasten und bei niedrigen Relativgeschwindigkeiten bewegen sich der Reibpartner und der Gegenlaufpartner des Gleitlagers im so genannten Mischreibungszustand. Dies bedeutet, dass der rotierende Reibpartner nicht vollständig vom zwischenliegenden Schmierfilm getragen wird, sondern dass eine Oberflächenberührung zwischen dem rotierenden Reibpartner und dem Gegenlaufpartner stattfindet. Diese Oberflächenberührung zieht einen Verschleiß sowohl am Reibpartner als auch am Gegenlaufpartner nach sich.

Generell sollte der Reibpartner, welcher eine Umfangslast aufweist, also in der Regel eine Welle, eine höhere Mikrohärte aufweisen als der Gegenlaufpartner. Aufgrund dieser Ausgestaltung passt sich die Oberflächenkontur des Gegenlaufpartners der Kontur des in der Regel als Welle ausgestalteten Reibpartners an. Nach anfänglichem Einlaufverschleiß bewirkt diese Konturanpassung einen reduzierten Verschleiß im Bereich der Mischreibung.

Die Reibung im so genannten hydrodynamischen Zustand, also im Gleitreibungszustand, in welchem der Reibpartner vollständig vom Schmierfilm getragen und somit auch vollständig vom Gegenlaufpartner getrennt ist, wird durch die Oberflächenqualität, also Rauigkeiten und Toleranzen sowie deren Wechselwirkung mit dem als Schmierfilm eingesetzten Schmierstoff bestimmt.

Nach dem Stand der Technik wird der Gegenlaufpartner mit einer Oberflächenschicht aus Weißmetall oder Bronze versehen. Der Reibpartner hingegen weist eine Oberfläche aus gehärtetem Stahl bzw. eine hartverchromte Oberfläche auf. Bei dieser Materialpaarung führt ein häufiger Betrieb des Gleitlagers im Mischreibungsgebiet aufgrund des hohen Oberflächenverschleißes am Gegenlaufpartner zu einer frühzeitigen Schädigung und damit zu einem frühzeitigen Ausfall des Gleitlagers.

Die DE 10 2008 037 871 A1 beschreibt ein Gleitelement mit Mehrfachschicht, umfassend eine äußere Laufschicht und eine innere Schutzschicht mit einer Härte HUₚₗₐₛₜvon größer als 5 GPa.

### Aufgabe der Erfindung

Ausgehend hiervon liegt der Erfindung die Aufgabe zugrunde, die Lebensdauer eines Gleitlagers zu erhöhen.

### Lösung der Aufgabe

Zur Lösung der Aufgabe wird von der Grundüberlegung ausgegangen, dass der Verschleiß bei Betrieb des Gleitlagers im Mischreibungsbetrieb minimiert werden muss. Dies wird durch eine Werkstoffpaarung an der Oberfläche des Reibpartners und des Gegenlaufpartners erreicht, welche schon bei niedrigen Drehzahlen einen Übergang vom Mischreibungsbetrieb in den hydrodynamischen Betrieb gewährleisten und zugleich einen hohen Verschleißwiderstand im Mischreibungsbetrieb aufweisen.

Die Lösung der Aufgabe besteht in der Merkmalskombination des Anspruchs 1. Die rückbezogenen Ansprüche betreffen teilweise vorteilhafte und teilweise für sich selbst erfinderische Weiterbildungen der Erfindung.

Nach dem Anspruch 1 wird entweder der Reibpartner oder der Gegenlaufpartner mit einem Hartstoff beschichtet. Vorzugsweise wird der die Umfangslast aufweisende Reibpartner, also in der Regel die Welle, mit einer Hartstoffschicht beschichtet. Hierdurch wird aufgrund der geänderten chemischen Eigenschaften der Oberfläche die Reibung im hydrodynamischen Zustand reduziert (verändertes Benetzungsverhalten) und die Verschleißfestigkeit im Mischreibungsbetrieb erhöht.

In bevorzugter Ausgestaltung weist die Hartstoffschicht eine Vickershärte (HV) von mindestens 800 HV auf. Vorzugsweise beträgt die Vickershärte (HV) mindestens 1000 HV. Mit der Erfindung wird angestrebt, die Hartstoffschicht so auszugestalten, dass die Vickershärte (HV) im Intervall zwischen 1000 HV und 2500 HV angesiedelt ist.

In weiterer vorteilhafter Ausgestaltung ist es vorgesehen, bei einem Reibpartner mit einer Vickershärte (HV) zwischen 1000 HV und 2500 HV den Gegenlaufpartner mit einer Oberflächenschicht, welche eine Vickershärte (HV) bis zu 700 HV aufweist, zu versehen. Ist das Gleitlager so ausgestaltet, dass die Hartstoffschicht am Gegenlaufpartner adaptiert ist, wird entsprechend die Oberflächenschicht am Reibpartner mit einer Vickershärte (HV) von 700 HV ausgelegt.

In weiterer vorteilhafter Ausgestaltung führt dies dazu, dass die Hartstoffschicht am Reibpartner mindestens die doppelte bis hin zur dreifachen Härte der zugeordneten Oberflächenschicht des Gegenlaufpartners aufweist. Weist umgekehrt der Gegenlaufpartner die Hartstoffschicht auf, ist diese wiederum doppelt bis dreimal so hart wie die Oberflächenschicht des zugeordneten Reibpartners.

In weiterer vorteilhafter Ausgestaltung weist die Hartstoffschicht eine Oberflächenrauigkeit (Rz) von weniger als 1,5, vorzugsweise weniger als 1 auf. Auch die Oberflächenrauigkeit der zugeordneten Oberflächenschicht liegt vorzugsweise unter Rz = 1,5 und vorzugsweise unter Rz = 1.

In weiterer vorteilhafter Ausgestaltung ist die Hartstoffschicht als diamantähnliche bzw. diamantartige Beschichtung ausgestaltet. Insbesondere ist sie als amorphe Kohlenstoffschicht, so genannte DLC-Schicht ausgestaltet. Als Alternative zur Verwendung einer amorphen Kohlenstoffschicht als Hartstoffschicht kann die Oberflächenhärte der Hartstoffschicht durch Carbonitrieren hergestellt und erhöht werden.

Als besonders geeignet hat sich eine harte diamantartige Beschichtung mit der Marke "Triondur ®" aus dem Hause der Anmelderin herausgestellt.

Die Schichtdicke der Hartstoffschicht ist vorzugsweise kleiner als 20 µm. Als besonders geeignet wird eine Schichtdicke im Bereich von 1 µm bis zu 10 µm angesehen. Bei dieser Ausgestaltung der Schichtdicke der Hartstoffschicht wird die Elastizität des mit der Hartstoffschicht beschichteten Reibpartners bzw. Gegenlaufpartners nicht negativ beeinflusst.

In vorteilhafter Ausgestaltung ist - wie bereits oben ausgeführt - die Welle als Reibpartner und die Lagerschale des Gleitlagers als Gegenlaufpartner ausgestaltet. In weiterer vorteilhafter Ausgestaltung können auf der Welle noch ein Lagerinnenring und/oder innerhalb der Lagerschale noch ein Lageraußenring angeordnet sein. Die Verwendung von Lagerinnen- und -außenringen begünstigt die leichtere Herstellbarkeit bzw. Montierbarkeit des Gleitlagers. Außerdem begünstigt die Verwendung von Lagerinnenringen und Lageraußenringen die Austauschbarkeit des jeweiligen Lagerinnenrings bzw. Lageraußenerings bei gleichzeitiger Weiterverwendung der übrigen Lagerkomponenten im Falle eines Lagerschadens.

### Kurze Beschreibung der Zeichnung

Anhand des in den Figuren dargestellten Ausführungsbeispiels wird die Erfindung mit weiteren Einzelheiten erläutert. Es zeigen:
- Fig. 1: eine Seitenansicht des erfindungsmäßigen Gleitlagers und
- Fig. 2: den Schnitt II-II aus Fig. 1.

In der nachfolgenden Beschreibung sind übereinstimmende Teile mit denselben Bezugsziffern versehen.

### Ausführliche Beschreibung der Zeichnung

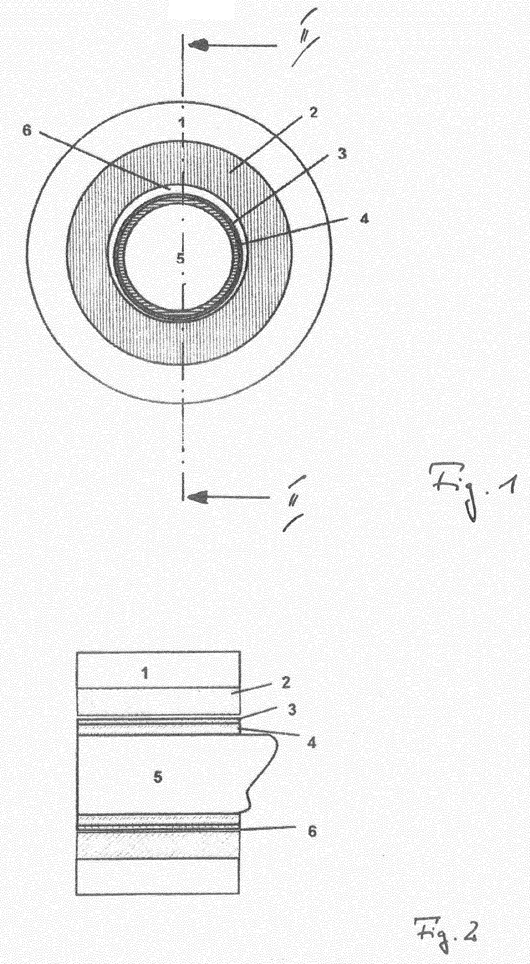

In Fig. 1 ist erkennbar, dass das Gleitlager außen von dem als Lagerschale wirksamen Gehäuse 1 umschlossen ist. Vom Gehäuse 1 gehalten ist der vom Gehäuse 1 umschlossene Lageraußenring 2. Im Lageraußenring 2 ruht der die Hartstoffschicht 3 tragende Lagerinnenring 4. Der Lagerinnenring 4 ist seinerseits auf die Welle 5 aufgeschrumpft. Zwischen der Hartstoffschicht 3 und den Lageraußenring 2 ist schließlich der Lagerspalt 6 erkennbar. In den Lagerspalt 6 ist das in den Zeichnungsfiguren nicht dargestellte Schmiermittel, welches im Betrieb den Schmierfilm bildet, eingebracht.

Im Ausführungsbeispiel bildet somit die Welle 5 mit ihrem Lagerinnenring 4 den rotierenden Reibpartner das Gleitlager. Den Gegenlaufpartner des Gleitlagers bildet hingegen das Gehäuse 1 mit seinem Lageraußenring 2. Im Ausführungsbeispiel trägt der Lagerinnenring 4 auf der Welle 5 die Hartstoffschicht 3, welche aus den im allgemeinen Teil der Beschreibung angegebenen Werkstoffen bestehen kann. Die Funktionsweise des Gleitlagers ist folgende:
Mit dem Anlaufen der Welle 5 gleitet teilweise der Lagerinnenring 4 über den Lageraußenring 2, wobei sich die Hartstoffschicht 3 und die Oberflächenschicht des Lageraußenrings 2 berühren. Durch die mit der Rotation auftretenden Zentrifugalkräfte dringt das Schmiermittel in sämtliche Bereiche des Lagerspalts 6 ein, so dass die Welle 5 sich im Lager derart selbst zentriert, dass die Welle 5 vom Schmierfilm im Lagerspalt 6 umlaufend getragen ist, so dass keine Berührungen mehr zwischen der Hartstoffschicht 3 und der Oberflächenschicht des Außenrings 2 erfolgen.

Bei dem vorstehend beschriebenen Ausführungsbeispiel war der Lagerinnenring 4 mit dem Hartstoff der Hartstoffschicht 3 beschichtet. Es versteht sich, dass in einem abgewandelten Ausführungsbeispiel vorgesehen sein kann, dass die Oberfläche der Welle 5 mit dem Hartstoff der Hartstoffschicht 3 beschichtet ist, insbesondere dann, wenn kein Lagerinnenring 4 vorgesehen ist. Es versteht sich weiter, dass in einem weiteren, abgewandelten Ausführungsbeispiel vorgesehen sein kann, dass anstelle der Welle 5 bzw. anstelle des Lagerinnenrings 4 der Lageraußenring 2 mit dem Hartstoff der Hartstoffschicht 3 beschichtet ist, wobei es sich ebenfalls versteht, dass in einem wiederum abgewandelten Ausführungsbeispiel vorgesehen sein kann, dass, insbesondere, wenn kein Lageraußenring 2 vorgesehen ist, die auf die Welle 5 weisende Innenfläche der Bohrung des Gehäuses 1 mit dem Hartstoff der Hartstoffschicht 3 beschichtet ist.

## Patentansprüche

1. Gleitlager mit einem rotierenden Reibpartner, einem Gegenlaufpartner und einem Schmierfilm (6) zwischen Reibpartner und Gegenlaufpartner,
**dadurch gekennzeichnet, dass**
der Reibpartner eine Welle (5) und einen auf der Welle (5) aufgeschrumpften Lagerinnenring (4) umfasst, wobei der Lagerinnenring (4) mit einer Hartstoffschicht (3) mit einer Schichtdicke zwischen 1 µm und 10 µm beschichtet ist, und
der Gegenlaufpartner durch einen Lageraußenring (2) und ein Gehäuse (1) gebildet ist, das den Lageraußenring (2) hält.

2. Gleitlager nach Anspruch 1, **gekennzeichnet dadurch, dass**
die Hartstoffschicht (3) eine Vickershärte (HV) von mindestens 800 HV hat.

3. Gleitlager nach Anspruch 1, **gekennzeichnet dadurch, dass**
die Hartstoffschicht (3) eine Vickershärte (HV) im Bereich von mindestens 1000 HV bis zu 2500 HV hat.

4. Gleitlager nach Anspruch 3, **dadurch gekennzeichnet, dass**
der Gegenlaufpartner eine Oberflächenschicht mit einer Vickershärte (HV) von bis zu 700 HV aufweist.

5. Gleitlager nach einem der Ansprüche 1 bis 4, **gekennzeichnet durch**
eine Oberflächenrauigkeit (Rz) der Hartstoffschicht (3) und der zugeordneten Oberflächen kleiner als 1,5, vorzugsweise kleiner als 1.

6. Gleitlager nach einem der Ansprüche 1 bis 5, **gekennzeichnet durch**
eine amorphe Kohlenstoffschicht (DLC) als Hartstoffschicht (3).

## Claims

1. Sliding bearing having a rotating friction partner, a running partner and a lubrication film (6) between the friction partner and the running partner,
**characterized in that**
the friction partner comprises a shaft (5) and a bearing inner ring (4) fitted onto the shaft (5), wherein the bearing inner ring (4) is coated with a hard material layer (3) with a thickness of between 1 µm and 10 µm, and
the running partner consists of a bearing outer ring (2) and a housing (1) which holds the bearing outer ring (2).

2. Sliding bearing according to Claim 1, **characterized in that**
the hard material layer (3) has a Vickers hardness (HV) of at least 800 HV.

3. Sliding bearing according to Claim 1, **characterized in that**
the hard material layer (3) has a Vickers hardness (HV) in the range from at least 1000 HV up to 2500 HV.

4. Sliding bearing according to Claim 3, **characterized in that**
the running partner has a surface layer with a Vickers hardness (HV) of up to 700 HV.

5. Sliding bearing according to one of Claims 1 to 4, **characterized by**
a surface roughness (Rz) of the hard material layer (3), and of the associated surfaces, of less than 1.5, preferably less than 1.

6. Sliding bearing according to one of Claims 1 to 5, **characterized by**
an amorphous carbon layer (DLC) as the hard material layer (3).

## Revendications

1. Palier lisse comprenant un partenaire de friction rotatif, un partenaire en opposition et un film de lubrifiant (6) entre le partenaire de friction et le partenaire en opposition,
**caractérisé en ce que**
le partenaire de friction comprend un arbre (5) et une bague de palier interne (4) emmanchée à chaud sur l'arbre (5), la bague de palier interne (4) étant revêtue d'une couche de matériau dur (3) ayant une épaisseur de couche comprise entre 1 µm et 10 µm, et
le partenaire en opposition étant formé par une bague de palier externe (2) et un boîtier (1) qui retirent la bague de palier externe (2).

2. Palier lisse selon la revendication 1, **caractérisé en ce que** la couche de matériau dur (3) présente une dureté Vickers (HV) d'au moins 800 HV.

3. Palier lisse selon la revendication 1, **caractérisé en ce que** la couche de matériau dur (3) présente une dureté Vickers (HV) de l'ordre d'au moins 1000 HV à 2500 HV.

4. Palier lisse selon la revendication 3, **caractérisé en ce que** le partenaire en opposition présente une couche de surface ayant une dureté Vickers (HV) allant jusqu'à 700 HV.

5. Palier lisse selon l'une quelconque des revendications 1 à 4, **caractérisé par** une rugosité de surface (Rz) de la couche de matériau dur (3) et des surfaces associées qui est inférieure à 1,5, de préférence inférieure à 1.

6. Palier lisse selon l'une quelconque des revendications 1 à 5, **caractérisé par** une couche de carbone amorphe (DLC) en tant que couche de matériau dur (3).
